# EUROPEAN PATENT APPLICATION

(11) **EP 4 617 040 A2**
(43) Date of publication of application: **17.09.2025**
(21) Application number: 25193997.1
(22) Date of filing: 31.07.2020
(51) Int. Cl.: B29C 48/00

(54) **USE OF POST-INDUSTRIAL RECYCLED MATERIAL IN FLEXIBLE PACKAGES**

(62) Divisional of application: 20188844.3
(71) Applicant: The Procter & Gamble Company, Cincinnati, OH 45202 (US)
(72) Inventor: CELIK, Necmettin, 41480 Gebze/Kocaeli (TR); KOHLWEYER, Christian, 65824 Schwalbach am Taunus (DE)
(74) Representative: Elkington and Fife LLP

(57) **Abstract**

Use of post-industrial recycled (PIR) material for a making flexible package made of polymeric film. The PIR material is formed of precursor polymeric film which is substantially the same as the polymeric film of the flexible package. The precursor polymeric film may be obtained from precursor flexible packaging. The invention also relates to a method of making a flexible packaging using PIR material formed of precursor polymeric film which is substantially the same as the polymeric film of the flexible package.

## Description

### FIELD

The present disclosure relates to the use of post-industrial recycled material in flexible packages as well as to methods for making such flexible packages.

### BACKGROUND

Providing various different products in flexible packages made of polymeric film material is widely known. For example, absorbent articles, such as diapers, bibs, wipes, sanitary napkins, tampons, etc. are commonly packaged in flexible packages made of film.

In view of increasing focus on environmental aspects, sustainability of consumer products is growing, including the way in which these products are packed. Packaging material based on petrol-based raw materials, such as polymeric materials, is more and more seen as problematic by consumers and manufacturers.

To address these concerns, different approaches have been evaluated and continue to be explored. For example, all or at least a certain proportion of the petrol-based material can be replaced with materials derived from renewable resources, such as starch. Another approach is the recycling of packaging material back into the packaging manufacturing process.

However, adding recycled materials back into the manufacturing process often negatively impacts the quality of the resulting new flexible film packaging. These adverse effects can relate to a number of properties, such as mechanical aspects (e.g. tensile strength or elongation at break), optical properties of the film material, or reduced processability, such as printing or sealing. Due to these problems, flexible film packages often comprise only relatively small amounts of recycled materials.

It would thus be desirable to provide a recycling approach for making flexible packages which reduces or even offsets the above-mentioned negative effects while at the same time enabling use of relatively high amounts of recycled materials.

### SUMMARY

The invention relates to use of post-industrial recycled material for making a flexible package made of polymeric film. The polymeric film may have a thickness of from 20 µm to 100 µm. The post-industrial recycled material is formed of a precursor polymeric film which is substantially the same as the polymeric film of the flexible package. The post-industrial recycled material constitutes at least 30 weight-%, or at least 40 weight-%, or at least 45 weight-%, or at least 50 weight-%, or at least 55 weight-% based on the total weight of the new polymeric film.

Preferably, the precursor polymeric film is obtained by removing portions from flexible precursor packages, wherein the flexible precursor packages are made of precursor polymeric film. The flexible precursor packages may be wicketed flexible precursor packages and the portions of the precursor polymeric material removed may be the wicket panel.

The polymeric film and the precursor polymeric film may be formed of polyethylene, such as LDPE (Low Density PolyEthylene), LLDPE (Linear Low Density PolyEthylene), MDPE (Medium Density PolyEthylene) etc.

The invention also relates to a method of making a flexible package made of polymeric film. The method comprising the steps of
a) obtaining post-industrial recycled material from post-industrial recycling of precursor polymeric film formed of precursor polymeric material which is substantially the same as the virgin polymeric material of step c);
b) providing at least 30 weight-%, or at least 35 weight-%, or at least 40 weight-%, or at least 45 weight-%, or at least 50 weight-%, or at least 55 weight-% post-industrial recycled material obtained in step a) based on the total weight of the polymeric film, e.g. in the form of resin pellets;
c) providing up to 70 weight-%, or up to 65 weight-%, or up to 60 weight-%, or up to 55 weight-%, or up to 50 weight-%, or up to 45 weight-% of virgin polymeric material based on the total weight of the polymeric film;
d) jointly melting the virgin polymeric material and the post-industrial recycled material;
e) extruding the molten polymeric material and molten post-industrial recycled material to form a polymeric film;
f) providing print on one or both surfaces of the polymeric film; and
g) converting the polymeric film into the flexible package.

The precursor polymeric film obtained in method step a) may be obtained by removal of the precursor polymeric film from flexible precursor packages.

The precursor polymeric film of the method may be compressed after removal from the flexible precursor packages before method step a).

The polymeric film formed in method step e) may comprise a first outer layer, a second outer layer and one or more inner layers. The first outer layer may face towards the interior of the flexible package wherein first areas of the first outer layer may be sealed to second areas of the first outer layer to form seams. The second outer layer may comprise a printed surface area.

The one or more inner layers of the polymeric film formed in method step e), in total, may comprise more of the post-industrial recycled material than each of the first and second outer layers.

The second outer layer of the polymeric film formed in method step e) may comprise more of the post-industrial recycled material than the first outer layer.

The method may further comprise the steps of h) inserting compressed products into the flexible packages and h) sealing the flexible packages to provide closed flexible packages. The compressed products may be absorbent articles, such as diapers, pants, sanitary napkins, wipes or wet wipes. The absorbent articles may be disposable.

The polymeric film formed in method step e) may have a tensile strength in machine direction and cross-machine direction of a least 2 N/mm as measured according to ISO 527-1:2012.

The polymeric film formed in method step e) may have a tensile strength at 10% elongation in machine direction and cross-machine direction of at least 0.75 N/mm as measured according to ISO 527-1:2012.

The polymeric film formed in method step e) may have an elongation at break in machine direction and cross-machine direction of at least 700 % as measured according to ISO 527-1:2012.

The polymeric film formed in method step e) may have a thickness of from 20µm to 100 µm as measured according to ISO 4593:1993.

The polymeric film formed in method step e) may be formed of polyethylene, such as LDPE, LLDPE, MDPE etc.

The polymeric film formed in method step e) may not comprise more than 2.0 weight-%, or not more than 1.0 weight-%, or not more than 0.5 weight-%, or even 0.0 weight-% based on the total weight of the polymer film, of post-industrial recycled material other than that obtained in step a), which may be obtained by removal of the precursor polymeric film from flexible precursor packages.

### BRIEF DESCRIPTION OF THE DRAWINGS

Fig. 1 is a front, perspective view exemplifying a flexible package.
Fig. 2 is a perspective view of a wicketed flexible package in a flat configuration.
Fig. 3 is a top, perspective view of a stack of wicketed flexible package.
Fig. 4 is a schematic, plan view of a wicketed flexible package having a wicket panel.
Fig. 5 is a schematic, plan view of a flexible package after removal of the wicket panel.

### DETAILED DESCRIPTION

The following definitions may be useful in understanding the present disclosure.

"Machine direction" (MD) is used herein to refer to the direction of material flow through a process. In addition, relative placement and movement of material can be described as flowing in the machine direction through a process from upstream in the process to downstream in the process.

"Cross direction" (CD) is used herein to refer to a direction that is not parallel with, and usually perpendicular to, the machine direction.

"Sealed" refers herein to a package having an interior that is inaccessible until the package is ruptured. It also refers to two or more layers of a polymeric film which are overlaying each other and are joined to each other, e.g. to form side seams of a flexible package. In the side seam, the layers of polymeric film are sealed such that they cannot be separated without rupturing or tearing the polymeric film.

"Virgin polymeric material" as used herein, means the polymeric material produced directly from the petrochemical or plant based feed-stock, such as natural gas or crude oil or sugar cane, which has never been used or processed before.

"Resin pellets", as used herein, are small granules of polymeric material, which may have the shape of a cylinder or a disc. The size of the resin pellets may range from 2mm to 5mm with a diameter of a few mm. These resin pellets are molten and formed into the polymeric film of the present invention.

As used herein, "absorbent article" refers to devices that absorb and contain body exudates, and, more specifically, refers to devices that are placed against or in proximity to the body of the wearer to absorb and contain the various exudates discharged from the body. Absorbent articles may include diapers (baby diapers and diapers for adult incontinence), pants (for babies or for adults), absorbent inserts (which are intended to be inserted into an outer cover to form a diaper or pant), feminine care absorbent articles such as sanitary napkins or pantiliners, and the like. As used herein, the term "exudates" includes, but is not limited to, urine, blood, vaginal discharges, sweat and fecal matter. Preferred absorbent articles of the present invention are disposable absorbent articles, more preferably disposable diapers and disposable pants.

As used herein, "disposable" is used in its ordinary sense to mean an article that is disposed or discarded after a limited number of usage over varying lengths of time, for example, less than 20 usages, less than 10 usages, less than 5 usages, or less than 2 usages. If the disposable absorbent article is a diaper, a pant, sanitary napkin, sanitary pad or wet wipe for personal hygiene use, the disposable absorbent article is most often intended to be disposed after single use.

Recycling of polymeric materials for making new products or materials, such as packaging materials, is widely known. Generally, it is distinguished between pre-consumer/ post-industrial recycled material (also referred to as PIR) and post-consumer recycled material (also referred to as PCR), e.g. as described in ISO norm 14021:2016 (E).

PCR material is waste created by consumers after a product has reached the end of its use. This material is diverted from the landfill or recuperated in recollection systems and utilized in the production of other commodities.

In contrast to PCR materials, PIR relates to reintroduction of waste generated in a manufacturing process back into the original manufacturing process. Levels of recycling are typically rather low, i.e. the percentage of the PIR in the product that is manufactured is relatively low, such as about up to 10% of PIR materials.

For flexible packages, the manufacturing process of the polymeric film in takes place at one manufacturing site while the manufacturing of the flexible package, i.e. the conversion of a polymeric film into the flexible package is most often carried out at another manufacturing site. For PIR materials, if a manufacturing process produces an intermediate product, such as a polymeric film, the recycled waste that is fed back into the manufacturing process typically stems from the manufacturing process of the intermediate process and not from the manufacturing process of the end product (such as a flexible package).

Thus, for flexible packages, while recycling of low amounts of waste polymeric film is known, recycling of end products (i.e. the flexible package) back into the manufacturing process of the intermediate product (the polymeric film) is hitherto not practiced.

Prior to being converted into a flexible package, the polymeric film is provided with print on one or both of its surfaces. The polymeric film is provided with print at least on the outer surface, i.e. on the surface which forms the exterior of the flexible package.

In the formation of seals, layers of the polymeric film are joined to each other, e.g. to form side seams. Formation of seals often involves the use of processing aids, which are applied in the areas of the polymeric film, where the seals are to be formed. The processing aids facilitate a durable seal which withstands e.g. the pressure exerted on the flexible package by the products contained in the package (especially for compressed products, such as compressed absorbent articles). For printing, inks and dyes are applied on the surface of the polymeric film, which forms the outwardly facing surface of the final package. Other surfacing finishes which alter the surface of the polymeric film, such as varnishes or the like, are also known.

Hence, the flexible package contains components which are not comprised by the polymeric film prior to conversion into the flexible package, making recycling of flexible packages problematic.

### Use of PIR material for making a flexible package made of polymeric film

The present invention relates to the use of post-industrial recycled material for making a flexible package made of polymeric film.

The flexible package can take any shape and size known in the art and suitable for the product to be contained therein. For example, flexible packages may include opposing first and second panels. Each panel may define a top edge portion, a bottom edge portion, a left side edge portion, and a right side edge portion. The first and second panels may be joined at a first side seam along left side edge portions of the first and second panels and at a second side seam along right side edge portions of the first and second panels. The flexible package may include an opening feature along a top or bottom edge portion of the package for opening the flexible package. The opening feature may, for example be a perforation. The opening feature may be reclosable. The reclosable features may include a lid, tape tab fastener, hook and loop fastener, snap, button, or latch, for example. The flexible package may also comprise a handle for ease of carrying.

The post-industrial recycled material used for making a flexible package made of polymeric film is formed of precursor polymeric film which is substantially the same as the polymeric film of the flexible package. "Precursor polymeric film", as used herein, refers to the PIR material whereas "polymeric film", without the term "precursor" prepended, refers to the polymeric film that is generated and that comprises a certain percentage of the precursor polymeric film.

The polymeric film may be a monolayer material, such that the film, throughout its thickness, consists of the same material composition. However, it is preferred that the polymeric film comprises more than one layer, such a first outer layer, a second outer layer and one or more inner layers. The first outer layer may face towards the interior of the flexible package, with first areas of the first outer layer being sealed to second areas of the first outer layer to form seams (e.g. side seams). The second outer layer may comprise a printed surface area.

The first outer layer may therefore comprise small quantities of additives which improve the seal ability of the first outer layer. Likewise, the second outer layer may comprise small quantities of additives which improve the printability of the second outer layer.

The one or more inner layers contribute to the overall durability and strength (such as the tensile strength) of the polymeric film.

The one or more inner layers may have a higher basis weight than the basis weight of each of the first and second outer layers. The one or more inner layers may have a higher basis weight that the basis weight of the first and second outer layers combined. If the polymeric film has more than one inner layer, the foregoing relates to the combined basis weight of the all inner layers.

If the polymeric film comprises more than one layer, the individual layers may comprise different percentages of the PIR material.

The precursor polymeric film is "substantially" the same as the polymeric film of the flexible package, as the polymeric composition in each of the respective layers of the precursor polymeric film and the polymeric film may likely not be fully identical. The precursor polymeric film cannot be separated into the layer it comprises, as these layers have most often been co-extruded. Hence, the precursor polymeric film can only be molten as a whole, including all layers. As a consequence, additives or the like, which were only present in certain layers of the precursor polymeric film, may be present in certain other layers of the polymeric film if such layer comprises recycled material from the precursor polymeric film. The term "substantially" is used herein to take such minor deviations into account.

The post-industrial recycled material formed of the precursor polymeric film constitutes at least 30 weight-%, or at least 40 weight-%, or at least 45 weight-%, or at least 50 weight-%, or at least 55 weight-% based on the total weight of the polymeric film.

The precursor polymeric film may be obtained by removing portions from flexible precursor package, wherein the flexible precursor packages are made of precursor polymeric film. Hence, the precursor polymeric film may not be waste generated in the manufacturing process for making the polymeric film and recycled directly back into the manufacturing process. Instead, the polymeric film obtained by removing portions for flexible precursor packages relates to waste that is generated at the manufacturing site, where the products (such as absorbent articles) are made and subsequently filled into the flexible precursor packages. The flexible precursor package may thus be provided by the manufacturer of the products contained in the flexible package.

To increase the efficiency of the recycling process, the precursor polymeric film may be compressed prior to being used in the making of a flexible polymeric film. Such compression may take place at the manufacturing site, where the precursor polymeric film has been removed from the flexible precursor packages. For example, if removal occurs at the production site of an absorbent article manufacturer, the precursor polymeric film may be compressed at this site.

At this point in time the flexible package may already comprise certain processing aids, e.g. helping to facilitate proper sealing for durable seams, as well as inks and dyes to provide the outer (exterior) surface of the flexible package with artwork, such as various images, colors, text, and the like. Further text or graphics printed on the exterior of flexible package may relate to, e.g. brand name, size, product line, advertising, marketing claims, safety information, instructions for use, and the like. Moreover, at this point in time, the flexible package may comprise additional components, such as tapes or other means to impart the flexible package with reclosability, or a handle that has been attached to the flexible package. Such separate components may be attached to the flexible package, e.g. by adhesive, ultrasonic welding, heat, pressure or combinations thereof.

"Flexible precursor packages, as used herein, refers to packages from which the PIR material is derived, whereas "flexible packages", without the term "precursor" added, refers to the flexible package that is made that that comprises the polymeric film obtained by removing portions of a flexible precursor package.

Flexible precursor packages are often provided as so-called precursor wicketed flexible packages, which are described in more detail below.

Wicketed flexible packages comprise portions (namely a "wicket panel"), which are removed, typically after the flexible package has been filled with products. The removed wicket panel is waste material. Depending on the size and dimension of the wicket panel relative to the size and dimension of the flexible package, the wicket panel may constitute a substantial proportion of the wicketed flexible package. Hence, the amount of waste material generated by the removal of the wicket panel can be quite considerable. The wicket panel may form at least 3 weight-%, or at least 5 weight-%, or at least 8 weight-%, or at least 10 weight-% based on the total weight of the wicketed flexible package, such as the precursor wicketed flexible package. The wicket panel may not form more than 20 weight-% based on the total weight of the wicketed flexible package, such as the precursor wicketed flexible package.

In some circumstances, the polymeric film comprising PIR material exhibits malodor. It has been found that this malodor is due to inks and dyes used to provide the surface of the flexible precursor film with printed areas (e.g. as artwork or the like). The malodor may be reduced or even eliminated if the precursor polymeric film does not comprise any printed areas.

As said above, the polymeric film may comprise more than one layer. For example, the polymeric film may comprise a first outer layer, a second outer layer and one or more inner layers.

The first outer layer may face towards the interior of the flexible package, with first areas of the first outer layer being sealed to second areas of the first outer layer to form seams. Such sealed areas may have been treated with a processing aid prior to sealing to help obtain a durable seam. Alternatively or in addition, the first outer layer may comprise certain additives to improve the seal strength.

The second outer layer may comprise a printed surface area. Similar to the first outer layer, the second outer layer may have been treated with a processing aid prior to printing to improve the printing quality. Alternatively or in addition, the second outer layer may comprise certain additives to improve the printing quality.

Generally, it may be desirable to have more of the PIR material in the one or more inner layers than in the first and/or second outer layer of the polymeric film.

The one or more inner layers, in total, may comprise more of the post-industrial recycled material than each of the first and second outer layers. Hence, the total amount of PIR material in the one or more inner layers may be higher than the total amount of the PIR material in the outer layers.

The one or more inner layers may form more than 50 weight-% of the total basis weight of the polymeric film. The percentage of the post-industrial recycled material in the one or more inner layers based on the total basis weight of the one or more inner layers (the combined basis weight if there is more than one inner layer) may be higher than the percentage of the post-industrial recycled material in the first outer layer based on the total basis weight of the outer layer. Alternatively or in addition, the percentage of the post-industrial recycled material in the one or more inner layers based on the total basis weight of the one or more inner layers (the combined basis weight if there is more than one inner layer) may be higher than the percentage of the post-industrial recycled material in the second outer layer based on the total basis weight of the outer layer.

The polymeric film may be formed of polyolefin. For example, the polymeric film may be formed of polypropylene, polyethylene, or combinations thereof. A suitable polyethylene may be LDPE, LLDPE, MDPE, polyethylene based on Ziegler-Natta polymerization, and the like.

So far, recycling of materials often leads to a quality decrease in the products comprising the recycled materials. Hence, PCR and also PIR materials are typically only added at relative low levels. It has now been found that the PIR materials of the present invention can be added at relatively high levels to flexible packages made of polymeric film without substantially compromising key mechanical properties. This applies even if the PIR material is not a direct waste product of the polymeric film manufacturing process, but is a more downstream material, namely derived by removing portions of flexible packages made of the polymeric film (such as by trimming processes, e.g. removal of the wicket panel). The inventors have proven that polymeric films comprising at least 30 weight-%, or at least 40 weight-%, or at least 45 weight-%, or at least 50 weight-%, or at least 55 weight-% of PIR material (formed of precursor polymeric film which is substantially the same as the polymeric film comprising the PIR material) based on the total weight of the polymeric film results in polymeric films with good tensile strength and elongation at break. The inventors have measured these properties in the polymeric films comprising the PIR material and have also compared them to the mechanical properties from polymeric films not comprising any recycled materials (i.e. they are only formed of so-called virgin material). The results of the measurements are set out below.

The polymeric film of the flexible package obtained from the use of post-industrial recycled material for making a flexible package, wherein the PIR material is formed of precursor polymeric film which is substantially the same as the polymeric film of the flexible package and which constitutes at least 30 weight-% based on the total weight of the polymeric film, may have a tensile strength in machine direction which is at least 90%, preferably 95%, even more preferably at least 99% of the tensile strength in machine direction of the precursor polymeric film. The polymeric film may also have a tensile strength in cross-machine direction which is at least 90%, preferably 95%, even more preferably at least 99% of the tensile strength in cross-machine direction of the precursor polymeric film as measured according to ISO 527-1:2012. Alternatively or in addition, the polymeric film may have an elongation at break in machine direction which is at least 90%, preferably 95%, even more preferably, at least 99% of the elongation at break in machine direction of the precursor polymeric film, and may have an elongation at break in cross-machine direction which is at least 90%, preferably 95%, even more preferably at least 99% of the elongation at break in cross-machine direction of the precursor polymeric film as measured according to ISO 527-1:2012.

### Method of making a flexible package

The invention also relates to a method of making a flexible package made of polymeric film. The method comprises the steps of
a) obtaining post-industrial recycled material from post-industrial recycling of precursor polymeric film formed of precursor polymeric material which is substantially the same as the virgin polymeric material of step c);
b) providing at least 30 weight -% post-industrial recycled material obtained in step a) based on the total weight of the polymeric film; preferably in the form of resin pellets
c) providing up to 70 weight -% of virgin polymeric material based on the total weight of the polymeric film; preferably in the form of resin pellets
d) jointly melting the virgin polymeric material and the post-industrial recycled material;
e) extruding the molten polymeric material and molten post-industrial recycled material to form a polymeric film
f) providing print on one or both surfaces of the polymeric film; and
g) converting the polymeric film into the flexible package.

"Virgin polymeric material" means the polymeric material produced directly from the petrochemical or plant based feed-stock, such as natural gas or crude oil or sugar cane, which has never been used or processed before.

The PIR material provided in method step b) and the virgin polymeric material provided in method step c) may jointly form at least 95 weight-%, or at least 97 weight-%, or at least 98 weight-%, or at least 99 weight-%, or at least 99.5 weight-%, or 100 weight-% of the polymeric film formed in method step e).

The PIR material provided in method step b) and the virgin polymeric material provided in method step c) may be mixed prior to jointly melting them.

Extrusion of the molten polymeric material in method step e) may be done such as to form a polymeric film having one or more inner layers, a first outer layer and a second outer layer, as is described below in more detail. The composition of the different layers may not be the same. For example, the one or more inner layers may comprise more of the PIR material provided in method step b) compared to the first outer layer and/or compared to the second outer layer. Therefore, method step b) of jointly melting the PIR material provided in method step b) and the virgin polymeric material provided in method step c) may require that not only one composition of jointly molten polymeric material is made but several compositions of jointly molten polymeric material and wherein the different compositions of jointly molten polymeric material are subsequently extruded to form the different layers of the polymeric film. One composition may form one layer of the polymeric film, or may form more than one layer of the polymeric film, which are separated from each other by one or more other layers which are provided in between the layers of same composition.

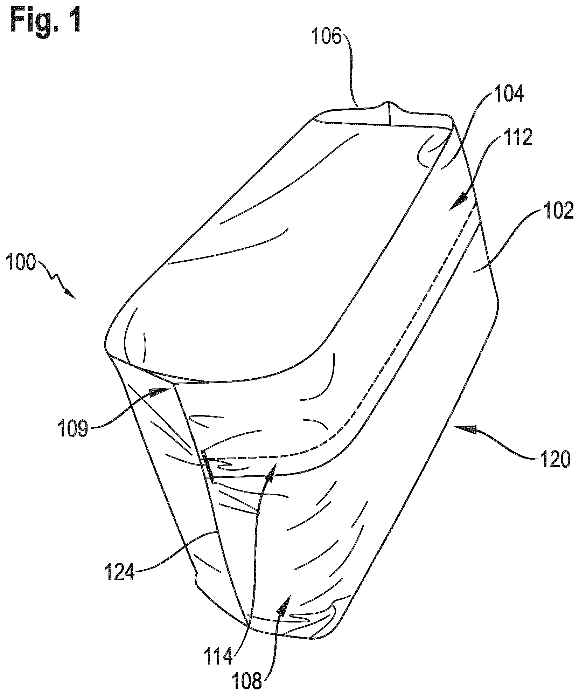

Method step g), converting the polymeric film into the flexible package, can be done by any method known in the art. Forming flexible packages of polymeric films are widely known and a multitude of methods and numerous different configurations, shapes and sizes of flexible packages are available on the market. One non-liming example of a flexible package is shown in Fig. 1 and described in more detail below.

As already set out above, the precursor polymeric film may be obtained by removal from flexible precursor packages and the details set out above for the use of the PIR are equally applicable to the method. For example, the polymeric film that is removed from the flexible precursor packages may not have any printed surface areas.

The flexible precursor packages may be wicketed flexible precursor packages and the polymeric film that is removed from the wicketed flexible precursor packages may be the wicket panel.

The precursor polymeric film of the method may be compressed after removal from the flexible precursor packages before method step a).

The polymeric film formed in method step e) may comprise a first outer layer, a second outer layer and one or more inner layers. The first outer layer may face towards the interior of the flexible package wherein first areas of the first outer layer may be sealed to second areas of the first outer layer to form seams. The second outer layer may comprise a printed surface area.

The one or more inner layers of the polymeric film formed in method step e), in total, may comprise more of the post-industrial recycled material than each of the first and second outer layers. Hence, the total amount of PIR material in the one or more inner layers may be higher than the total amount of the PIR material in the outer layers.

The one or more inner layers may form more than 50 weight-% of the total basis weight of the polymeric film. The percentage of the post-industrial recycled material of the one or more inner layers based on the total basis weight of the one or more inner layers (the combined basis weight if there is more than one inner layer) may be higher than the percentage of the post-industrial recycled material of the first outer layer based on the total basis weight of the outer layer. Alternatively or in addition, the percentage of the post-industrial recycled material of the one or more inner layers based on the total basis weight of the one or more inner layers (the combined basis weight if there is more than one inner layer) may be higher than the percentage of the post-industrial recycled material of the second outer layer based on the total basis weight of the outer layer.

The polymeric film formed in method step e) may be formed of polyolefin. For example, the polymeric film may be formed of polypropylene, polyethylene, or combinations thereof. A suitable polyethylene may be LDPE LLDPE, MDPE, polyethylene based on Ziegler-Natta polymerization, and the like.

The method may further comprise the steps of g) inserting compressed products into the flexible packages and h) sealing the flexible packages to provide closed flexible packages. The compressed products may be absorbent articles, such as diapers, pants, and sanitary napkins. The absorbent articles may be disposable. Compressed absorbent articles exert considerable pressure on the flexible packages and thus, the mechanical properties, as well as the seam strength of the flexible packages more important than for packages which contain non-compressed products or rather loosely packed products.

The polymeric film formed in method step e) may have a tensile strength in machine direction and in cross-machine direction of a least 2 N/mm as measured according to ISO 527-1:2012.

The polymeric film formed in method step e) may have a tensile strength at 10% elongation in machine direction and in cross-machine direction of at least 0.75 N/mm as measured according to ISO 527-1:2012.

The polymeric film formed in method step e) may have an elongation at break in machine direction and in cross-machine direction of at least 700 % as measured according to ISO 527-1:2012.

The polymeric film formed in method step e) may have a thickness of from 20µm to 100 µm as measured according to ISO 4593:1993.

The polymeric film formed in method step e) may not comprise more than 2.0 weight-%, or not more than 1.0 weight-%, or not more than 0.5 weight-%, or even 0.0 weight-% based on the total weight of the polymer film, of post-industrial recycled material other than that obtained in step a), which may be obtained by removal of the precursor polymeric film from flexible precursor packages.

The polymeric film formed in step e) may have a tensile strength in cross-machine direction which is at least 90%, preferably 95% of the tensile strength in cross-machine direction of the precursor polymeric film obtained in step a) as measured according to ISO 527-1:2012.

The polymeric film formed in step e) may have a tensile strength in cross-machine direction and in machine direction which is at least 90%, preferably 95% of the tensile strength in cross-machine direction and machine direction of the precursor polymeric film obtained in step a) as measured according to ISO 527-1:2012.

The polymeric film formed in step e) may have an elongation at break in cross-machine direction and in machine direction which is at least 90%, preferably 95% of the elongation at break in cross-machine direction and machine direction of the precursor polymeric film obtained in step a) as measured according to ISO 527-1:2012.

All comparison of the tensile strength and elongation at break of the polymeric film and precursor polymeric film is done with polymeric films and precursor polymeric films have the same thickness.

The polymeric film formed in step e) may not comprise more than 2.0 weight-%, or not more than 1.0 weight-%, or not more than 0.5 weight-%, or even 0.0 weight-% based on the total weight of the polymer film, of post-industrial recycled material other than that obtained in step a).

### Flexible package and flexible package with wicket panel

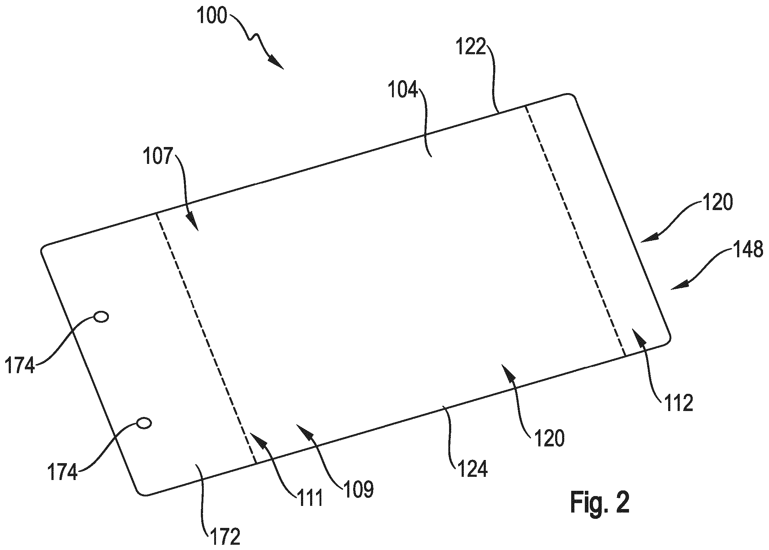

As shown in Fig. 2 the empty flexible packages may be configured as a wicketed package 148. As an example, such wicketed, flexible packages 100 may comprise a first panel 102, a second panel 104, and a wicket panel 172. The first panel 102 defines a first right side edge portion 106, a first left side edge portion 108, and a first bottom edge portion. The second panel 104 defines a second right side edge portion 107, a second left side edge portion 109, a hooded portion 112, and a second bottom edge portion 111. Of course, flexible packages not comprising a hooded portion are similarly applicable and useful for the present invention. The wicket panel 172 may be connected with the second bottom edge portion 111 of the second panel 104. The first and second panels 102 and 104 combine to define an interior and an exterior 120 of the package 100. A first seam 122 joins the first right side edge portion 106 of the first panel 102 with the second right side edge portion 107 of the second panel 104. A second seam 124 joins the first left side edge portion 108 of the first panel 102 with the second left side edge portion 109 of the second panel 104.

The wicket panel 172 comprises at least one wicket aperture 174, each wicket aperture 174 configured to receive a wicket. As shown in Fig. 2, the wicket panel 172 may include two wicket apertures 174. The first bottom edge portion and the second bottom edge portion 111 of the first and second panels 102 and 104 combine to define a second opening 176 in the package 100. The wicket panel 172 may extend beyond the first bottom edge portion of the first panel 102 such that the wicket panel 172 does not overlap the first panel 102.

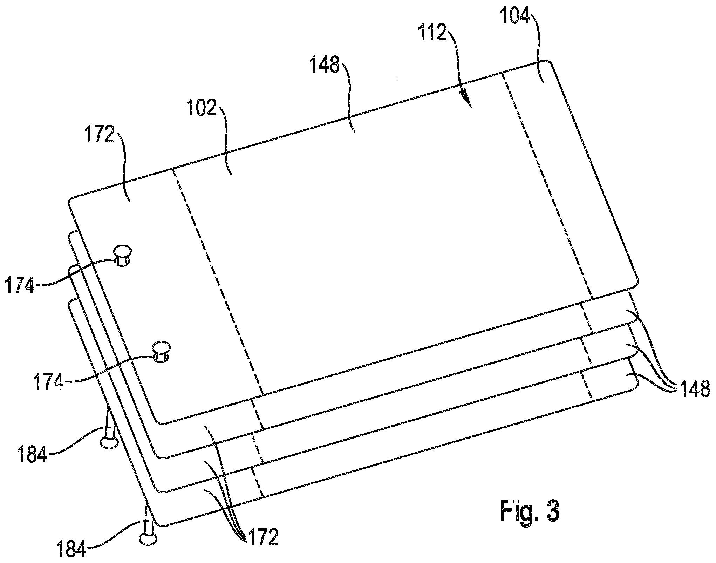

As shown in Fig. 3, a plurality of empty (i.e. not filled with absorbent articles or any other products) wicketed, flexible packages 148 may be stacked one on top of the other such that the wicket apertures 174 of each wicketed, flexible package 148 are aligned. A wicket 184 may extend through the wicket apertures 174 of each wicketed, flexible package 148 to hold the stack of wicketed, flexible packages 184 together. In an exemplary configuration wherein wicketed, flexible packages 148 in a stack each comprise two wicket apertures 174, two wickets 184 may be used. Various types of wickets 184 for holding a stack of wicketed, flexible packages 148 together may be used. With reference to Fig. 3, the plurality of wicketed, flexible packages 148 are held together by the wickets 184 while the absorbent articles are introduced into the wicketed, flexible package 148 through the second opening 176. Once the wicketed, flexible package 148 is filled e.g. with absorbent articles, the first and second panels 102 and 104 may be sealed together and the wicket panel 172 may cut away from the second panel 104. The removed wicket panel 172 may form the precursor polymeric film material used in the present invention.

The method of converting the polymeric film into a flexible package may be performed by any method known in the art, dependent which configuration, shape and size the flexible package is intended to take. For example, if converting the polymeric film into a wicketed, flexible packages 148, the method may include seaming first right and left side edge portions of a first panel, a second panel, and a gusset. A first seam 122 may be formed in the first and second right side edge portions 106, 107 of the first and second panel 102 and 104 and the right side edge portion of the gusset respectively. A second seam 124 may be formed in the first and second left side edge portions 108, 109 of the first and second panel 102 and 104 and the left side edge portion of the gusset, respectively. The first and second seams 122 and 124 may be formed in various ways, including ultrasonic welding, hot air seaming, adhesives, and the like. The steps of cutting the continuous length of material to form discrete wicketed bags 148 and forming the first and/or second seams 122 and 124 may occur concurrently. Alternatively, the steps of cutting and seaming may occur sequentially.

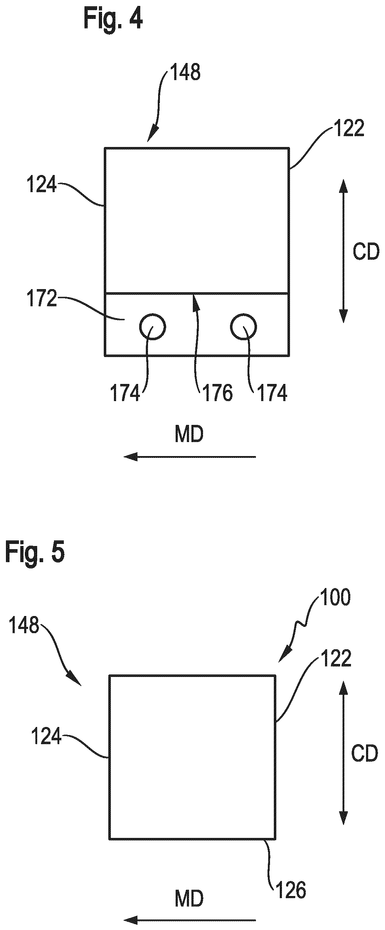

With reference to Fig. 4, a second opening 176 is defined by the second end portions of the first and second panels 102 and 104. The wicketed, flexible packages 148 may be filled with absorbent articles (or other products) by inserting the absorbent articles (or other products) through the second opening 176.

With reference to Fig. 5, once the wicketed, flexible package 148 is filled with absorbent articles, the second end portions of the first and second panels 102 and 104 may be joined together to form seam 126. Like the first and second seams 122 and 124, the third seam 126 may be formed in various ways as described above.

Additionally, the wicket panel 172 may be cut away from the second panel 104 to form the flexible package 100 such as shown in Fig. 1. The flexible package may comprise an opening feature, such as perforation 114. The steps of forming the third seam 126 and cutting the wicket panel 172 may occur concurrently. Alternatively, the steps of forming the third seam 126 and cutting the wicket panel 172 may occur sequentially. Various methods may be used to cut the wicket panel 172 from the second panel 104. Exemplary cutting apparatuses include knife rolls, die cutters, and lasers.

### Examples

The mechanical properties of polymeric films have been measured. All polymeric films where while and had a thickness of 70 µm. All films were made of three layers, a first outer layer, a second outer layer and one inner layer. The one inner layer formed 50 weight-% of the total polymeric film, while the first and second outer layer each formed 25 weight-% of the total polymeric film.
Different amounts of post-industrial material were comprised by the polymeric films. The PIR material was obtained from wicketed flexible precursor packages. The material removed from these packages were the wicket panels. The wicket panels did not comprise any printed areas and no sealed areas.

Side seam tensile strength was measured by taking a sample from a flexible packaging formed by the polymeric film and cutting out a sample which comprised the side seam. In the side seam, two layers of the polymeric film were sealed to each other (= "2-ply").

Thickness of the film was measured in accordance with ISO 4593:1993. The mechanical properties were measured in accordance with ISO 527-1:2012.

### Tensile strength, tensile strength at 10% elongation, and elongation at break:

Load cell force range: Measured force must be within 10% and 90 % of range
Signal sampling frequency: 50 Hz
Load cell: 5000 N; Accuracy: +/- 0.5 %
Sample dimensions: 25.4mm width (1 inch); Sample length: 150mm
Crosshead speed (= speed of elongation): 127 mm/min
The tests were carried out at 22°C and 55% RH.

**Table 1: Composition of polymeric film (all % are weight-% based on total film or based on respective layer)**

| | **Total polymeric film** | **1^{st} outer layer (forming interior surface of film)** | **2^{nd} outer layer (forming exterior surface of film)** | **Inner layer (between 1^{st} and 2^{nd} outer layer)** |
|---|---|---|---|---|
| Comparative Example | 100% virgin polymeric material | 100% virgin polymeric material | 100% virgin polymeric material | 100% virgin polymeric material |
| Example 1 | 67% virgin polymeric material and 33% PIR | 100% virgin polymeric material | 100% virgin polymeric material | 34% virgin polymeric material and 66% PIR |
| Example 2 | 50% virgin polymeric material and 50% PIR | 74% virgin polymeric material and 26% PIR | 100% virgin polymeric material | 13% virgin polymeric material and 87% PIR |
| Example 3 | 35% virgin polymeric material and 65% PIR | 18% virgin polymeric material and 82% PIR | 100% virgin polymeric material | 11% virgin polymeric material and 89% PIR |

**Table 2: Mechanical properties**

| Examples | **Comparative Example 1** | **Example 1** | **Example 2** | **Example 3** |
|---|---|---|---|---|
| Tensile Strength in CD [N/mm] | 2.318 | 2.334 | 2.459 | 2.218 |
| Tensile Strength in CD at 10% elongation [N/mm] | 1.054 | 1.056 | 0.950 | 0.924 |
| Elongation at break in CD [%] | 912.77 | 945.62 | 985.03 | 954.38 |
| Tensile Strength in MD [N/mm] | 2.606 | 2.534 | 2.548 | 2.242 |
| Tensile Strength in MD at 10% elongation [N/mm] | 0.944 | 0.960 | 0.838 | 0.814 |
| Elongation at break in MD [%] | 749.30 | 807.05 | 785.18 | 765.92 |
| Tensile strength Side Seam 2-ply right side*) [N/mm] | 1.71 | 1.60 | 1.54 | 1.34 |
| Tensile strength Side Seam 2-ply left side*) [N/mm] | 1.80 | 1.69 | 1.48 | 1.27 |

The data of table 1 show that tensile strength and elongation at break are only slightly lower for polymeric films comprising the PIR material of the present invention, partly the data proof that mechanical properties are parity or even better for polymeric films comprising the PIR material of the present invention, even for polymeric films comprising high amounts of PIR material.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. Use of post-industrial recycled material for a making flexible package made of polymeric film, wherein the post-industrial recycled material is formed of precursor polymeric film which is substantially the same as the polymeric film of the flexible package, wherein the post-industrial recycled material constitutes at least 30 weight-% based on the total weight of the polymeric film.

2. Use of claim 1, wherein the precursor polymeric film is obtained by removing portions from flexible precursor packages, wherein the flexible precursor packages are made of precursor polymeric film.

3. Use of claim 2, wherein the removed precursor polymeric film does not comprise any printed surface areas.

4. Use of any of claims 2 or 3, wherein the precursor polymeric film is compressed after removal from the flexible precursor packages.

5. Use of any of claims 2 to 4, wherein the flexible precursor packages are precursor wicketed flexible packages comprising a wicket panel, and the removed precursor polymeric film is the wicket panel.

6. Use of any of the preceding claims, wherein the polymeric film comprises a first outer layer, a second outer layer and one or more inner layers, and
wherein the first outer layer faces towards the interior of the flexible package, with first areas of the first outer layer being sealed to second areas of the first outer layer to form seams, and
wherein the second outer layer comprises a printed surface area.

7. Use of claim 6, wherein the one or more inner layers, in total, comprise more of the post-industrial recycled material than each of the first and second outer layers.

8. Use of claim 6 or 7, wherein the second outer layer comprises more of the post-industrial recycled material than the first outer layer.

9. Use of any of the preceding claims, wherein the polymeric film is formed of polyethylene.

10. Use of any of the preceding claims, wherein the polymeric film has a tensile strength in machine direction which is at least 90%, preferably 95% of the tensile strength in machine direction of the precursor polymeric film, and wherein the polymeric film has a tensile strength in cross-machine direction which is at least 90%, preferably 95% of the tensile strength in cross-machine direction of the precursor polymeric film as measured according to ISO 527-1:2012.

11. Use of any of the preceding claims, wherein the polymeric film has an elongation at break in machine direction which is at least 90%, preferably 95% of the elongation at break in machine direction of the precursor polymeric film, and wherein the polymeric film has an elongation at break in cross-machine direction which is at least 90%, preferably 95% of the elongation at break in cross-machine direction of the precursor polymeric film as measured according to ISO 527-1:2012.

12. Method of making a flexible package made of polymeric film, the method comprising the steps of
a) obtaining post-industrial recycled material from post-industrial recycling of precursor polymeric film formed of precursor polymeric material which is substantially the same as the virgin polymeric material of step c);
b) providing at least 30 weight-% post-industrial recycled material obtained in step a) based on the overall weight of the polymeric film;
c) providing up to 70 weight-% of virgin polymeric material based on the total weight of the polymeric film;
d) jointly melting the virgin polymeric material and the post-industrial recycled material;
e) extruding the molten polymeric material and molten post-industrial recycled material to form a polymeric film
f) providing print on one or both surfaces of the polymeric film; and
g) converting the polymeric film into the flexible package.

13. The method of claim 12, wherein the precursor polymeric film is obtained by removal from flexible precursor packages.

14. The method of claim 13, wherein the precursor polymeric film removed from the flexible precursor packages does not have any printed surface areas.

15. The method of any of claims 12 to 14, wherein the polymeric film formed in step e) has a tensile strength in cross-machine direction which is at least 90%, preferably 95% of the tensile strength in cross-machine direction of the precursor polymeric film obtained in step a) as measured according to ISO 527-1:2012.

16. The method of any of claims 12 to 15, wherein the polymeric film formed in step e) has a tensile strength in cross-machine direction and in machine direction which is at least 90%, preferably 95% of the tensile strength in cross-machine direction and machine direction of the precursor polymeric film obtained in step a) as measured according to ISO 527-1:2012.

17. The method of any of claims 12 to 16, wherein the polymeric film formed in step e) has an elongation at break in cross-machine direction and in machine direction which is at least 90%, preferably 95% of the elongation at break in cross-machine direction and machine direction of the precursor polymeric film obtained in step a) as measured according to ISO 527-1:2012.

18. The method of any of claims 12 to 17, wherein the polymeric film formed in step e) is formed of polyethylene.

19. The method of any of claim 12 to 18, wherein the polymeric film formed in step e) does not comprise more than 2.0 weight-%, or not more than 1.0 weight-%, or not more than 0.5 weight-%, or even 0.0 weight-% based on the total weight of the polymer film, of post-industrial recycled material other than that obtained in step a).
